# EUROPÄISCHE PATENTSCHRIFT

(11) **EP 2 980 499 B1**
(45) Veröffentlichungstag und Bekanntmachung des Hinweises auf die Patenterteilung: **31.01.2018**
(21) Anmeldenummer: 15175830.7
(22) Anmeldetag: 08.07.2015
(51) Int. Cl.: F24F 12/00

(54) **LÜFTUNGSGERÄT MIT WÄRMERÜCKGEWINNUNG**
VENTILATION DEVICE WITH HEAT RECOVERY
APPAREIL DE VENTILATION AVEC RECUPERATION DE CHALEUR

(30) Priorität: 30.07.2014 DE 102014215017
(43) Veröffentlichungstag der Anmeldung: 03.02.2016
(73) Patentinhaber: MAICO Elektroapparate-Fabrik GmbH, 78056 Villingen-Schwenningen (DE)
(72) Erfinder: Meißner, Johannes, 78083 Dauchingen (DE); Kammerer, Stefan, 78052 Villingen-Schwenningen (DE)
(74) Vertreter: Grosse, Rainer

(56) Entgegenhaltungen:
- EP-A1- 0 184 887
- EP-A2- 0 044 560
- EP-A2- 0 979 975
- GB-A- 2 451 303

## Beschreibung

Die Erfindung betrifft ein Lüftungsgerät mit Wärmerückgewinnung für eine Wohnraumlüftung, gemäß dem Oberbegriff des Anspruchs 1. Ein solches Lüftungsgerät ist beispielsweise aus EP 0 044 560 A2 bekannt. Derartige, bekannte Lüftungsgeräte dienen zur Belüftung und Klimatisierung von Wohnräumen, beispielsweise Räumen einer Wohnung oder eines Einfamilienhauses. Über einen ersten Luftweg des Lüftungsgeräts wird Außenluft angesaugt und - nach Passieren eines Wärmetauschers - als Zuluft in einen Wohnraum eingebracht. Abluft des Wohnraumes wird über den zweiten Luftweg abgeführt, wobei hierbei ebenfalls der Wärmetauscher durchströmt wird, sodass beispielsweise im Winter die kalte Außenluft von der wärmeren Abluft vorgewärmt wird. Da eine Wohnung, ein Einfamilienhaus oder dergleichen mehrere Wohnräume aufweist, wird die Zuluft des Lüftungsgeräts auf diese Wohnräume verteilt, d.h., eine an das Lüftungsgerät angeschlossene Luftleitung führt zu einem separaten Luftverteiler, an dem mehrere, zu den einzelnen Räumen führende Luftleitungen angeschlossen sind. Die Abluft wird vorzugsweise zentral innerhalb der Wohnung oder des Einfamilienhauses abgeführt oder beispielsweise aus zwei verschiedenen Abluftbereichen, insbesondere Küche und Badezimmer und eventuell angrenzendem Gäste-WC. Die bekannten Lüftungsgeräte sind hinsichtlich der Betriebsführung relativ unflexibel, so dass hier Verbesserungsbedarf besteht.

Der Erfindung liegt daher die Aufgabe zugrunde, ein Lüftungsgerät der eingangs genannten Art zu schaffen, das einfach und kostengünstig aufgebaut ist, einen flexiblen Lüftungs-/Klimatisierungsbetrieb zulässt und auch eine kostengünstige Betriebsführung ermöglicht.

Diese Aufgabe wird erfindungsgemäß durch die Merkmale des Anspruchs 1 gelöst. Dabei weist der erste Luftweg mehrere Zuluftauslässe für die Zuluft und eine zonal wirkende Volumenstromstelleinrichtung auf, mit der für eine Zonenlüftung der Luftvolumenstrom im ersten Luftweg auf die einzelnen Zuluftauslässe einstellbar aufgeteilt wird. Insbesondere ist den Zuluftauslässen die Volumenstromstelleinrichtung zugeordnet. Die sich im Lüftungsgerät befindende Volumenstromstelleinrichtung oder die dem Lüftungsgerät zugeordnete Volumenstromstelleinrichtung erlaubt es daher, den einzelnen Zuluftauslässen wählbar, insbesondere kontinuierlich im Volumen einstellbare Volumenstromanteile der Zuluft zuzuleiten, mit der Folge, dass verschiedene Zonen der Wohnung oder des Einfamilienhauses oder dergleichen entsprechend große Zonalvolumenströme erhalten. Es ist natürlich auch möglich, in ein und demselben Raum mehrere, beispielsweise zwei, Zuluftauslässe vorzusehen, die mittels der erläuterten Zonenlüftung mit einstellbar großen Zonalvolumenströmen beaufschlagt werden. Beispielhaft sollen zwei Räume einer Wohnung betrachtet werden, die jeweils einen Nennluftvolumenstrom (DIN 1946-6: Mai 2009) von 50 m³/h benötigen. Demgemäß muss das Lüftungsgerät für diese beiden Räume 100 m³/h fördern. Da sich die Bewohner zumeist jedoch nur in einem Raum aufhalten, also größtenteils des Tages im Wohnzimmer und nur nachts im Schlafzimmer, reicht es aus, nur dem Wohnzimmer einen Nennvolumenstrom von 50 m³/h zuzuführen und das unbelegte Schlafzimmer mit reduzierter Lüftung, beispielsweise 35 m³/h oder mit nur einer Lüftung zum Feuchteschutz (20 m³/h) zu belüften. Für die reduzierte Lüftung reicht es dann aus, wenn der Volumenstrom im ersten Luftweg 50 m³/h plus 35 m³/h, also 85 m³/h beträgt und mittels der erfindungsgemäßen Volumenstromstelleinrichtung eine Volumenstromaufteilung derart erfolgt, dass zwei Zona-Ivolumenströme entstehen, nämlich zum einen 50 m³/h pro Stunde für das Wohnzimmer und zum anderen 35 m³/h für das Schlafzimmer. Durch die Reduzierung der Luftmenge reduzieren sich die Lüftungswärmeverluste und es reduziert sich die elektrische Leistungsaufnahme der Luftfördereinrichtung, sodass pro Jahr zum Beispiel Einsparungen von 20,- bis 30,- Euro bei der Betriebsführung möglich sind. Befindet sich in jeder der beiden genannten Zonen (Wohnzimmer und Schlafzimmer) Personen, so stellt sich die Luftstromstelleinrichtung auf eine "Mittelstellung" ein, d.h., jedem der beiden Räume wird ein gleich großer Zonalvolumenstrom zugeführt und gleichzeitig wird von der Luftfördereinrichtung ein nicht reduzierter Luftvolumenstrom gefördert, nämlich 100 m³/h pro Stunde, sodass jeder Raum die erforderlichen 50 m³/h pro Stunde erhält. Mittels einer Personenerfassung (Bewegungsmelder) wird die Luftfördereinrichtung automatisch angesteuert. Das vorstehende Beispiel zeigt, dass mittels der Zonenlüftung einzelne Zonen der Wohnung, des Einfamilienhauses oder dergleichen unterschiedlich stark belüftet werden können und - sofern der Wärmetauscher in Funktion ist - auch eine entsprechende Temperaturbeeinflussung erfolgt. Vorzugsweise ist der Wärmetauscher nicht immer in Betrieb, sondern kann mittels eines geräteinteren Bypasses umgangen oder teilweise umgangen werden, wenn kein Wärmetausch gewünscht ist. Das vorstehende Beispiel zum Wohnzimmer und Schlafzimmer beinhaltet neben der unterschiedlichen Luftmengeneinstellung für die einzelnen Zonen auch eine Reduzierung beziehungsweise Erhöhung der geförderten Gesamtluftmenge, wobei dies schon eine weiterführende Anwendung des Gegenstandes der Erfindung darstellt, denn grundsätzlich besteht die Erfindung darin, einzelnen Zonen einstellbar große Zonalvolumenströme zuzuführen, unabhängig von einer bestimmten Luftvolumenstromgröße. Das Einstellen kann in groben Stufen, feinstufig, kontinuierlich, linear, nichtlinear und so weiter erfolgen, insbesondere in Abhängigkeit von mindestens einem vorgebbaren Parameter, zum Beispiel einer Personenanwesenheit, einer Zeitsteuerung, einer Sensorsteuerung (wobei der Sensor die Anwesenheit/Abwesenheit/Größe mindestens eines bestimmten Umstandes/Wertes erfasst) und/oder einer manuellen Steuerungsfunktion. Es ist also durchaus denkbar, dass - beispielsweise bei zwei Zuluftauslässen - insbesondere zeitweise ein Zuluftauslass keinen Zonalvolumenstrom führt und der andere Zuluftauslass den vollen, also gesamten Luftvolumenstrom oder entsprechend umgekehrt. Dann ist zum Beispiel die bereits erwähnte Mittelstellung insbesondere zeitweise denkbar, das also beide Zuluftauslässe die Hälfte des Luftvolumenstroms im ersten Luftweg führen, also zwei gleichgroße oder etwa gleichgroße Zonalvolumenströme. Natürlich ist auch jede Zwischeneinstellung denkbar, um entsprechend unterschiedlich große Zonalvolumenströme zu erhalten. Selbstverständlich ist die Erfindung auch nicht auf zwei Zuluftauslässe beschränkt, sondern es können auch mehr als zwei Zuluftauslässe vorhanden sein, die mittels der Volumenstromstelleinrichtung in entsprechender Weise angesteuert werden, sodass jeder der Zuluftauslässe einen entsprechend großen Zonalvolumenstrom ausstößt, d.h., der gesamte Luftvolumenstrom wird entsprechend aufgeteilt. Die erwähnte Wohnraumlüftung kann insbesondere als "kontrollierte Wohnraumlüftung" ausgebildet sein, die auch mit dem synonymen Begriff "konstante Wohnraumlüftung" bezeichnet wird. Die kontrollierte beziehungsweise konstante Wohnraumlüftung sieht einen volumenstromkonstanten oder einen druckkonstanten Betrieb vor, bei dem jeweils der über den ersten Luftweg zugeführte Luftvolumenstrom stets ebenso groß ist wie der über den zweiten Luftweg abgeführte Luftvolumenstrom. Ferner ist es denkbar, das erfindungsgemäße Lüftungsgerät im Steuerbetrieb und/oder im Regelbetrieb zu betreiben, wobei sich der Steuerbetrieb dadurch auszeichnet, dass bestimmte Größen, wie geförderte Volumenströme und/oder entsprechend große Zonalvolumenströme eingestellt werden, jedoch die tatsächlichen Werte davon abweichen können. Im Falle eines Regelbetriebs werden die tatsächlichen Werte erfasst und durch eine Regeleinrichtung derart korrigiert, dass sie den Vorgaben, also den Sollwerten entsprechen (die Istwerte entsprechen den Sollwerten). Die Erfindung sieht vor, dass zwischen zwei Zuluftauslässen mindestens ein Ablufteinlass für die Abluft liegt. Durch diese Anordnung lassen sich in der Wohnung, dem Einfamilienhaus oder dergleichen Kreuzungen von Luftleitungen vermeiden, die an das Lüftungsgerät angeschlossen sind und zu entsprechenden Einlässen und Auslässen in den unterschiedlichen Räumen und/oder Zonen führen. Oftmals sind die Örtlichkeiten von Wohnungen, Einfamilienhäusern oder dergleichen derart zugeschnitten, dass auf beiden Seiten eines Abluftbereichs Zuluftbereiche liegen, sodass sich vom Lüftungsgerät aus dahin führende Luftleitungen nicht kreuzen müssen und daher wesentlich unauffälliger, also optisch weniger stark in Erscheinung tretend, verlaufen. Nach einer Weiterbildung der Erfindung ist ein Gehäuse des Lüftungsgeräts vorgesehen, in dem sich der erste Luftweg, der zweite Luftweg, der Wärmetauscher, die Luftfördereinrichtung und die Volumenstromstelleinrichtung befinden. Alle Komponenten sind daher im Gehäuse untergebracht. Nach außen führen lediglich Einlässe und Auslässe für Außenluft, Zuluft, Abluft und Fortluft. Nach einer Weiterbildung der Erfindung ist vorgesehen, dass mindestens ein Außenlufteinlass für die Außenluft, die mehreren Zuluftauslässe, der mindestens eine Ablufteinlass und mindestens ein Fortluftauslass für die Fortluft am Gehäuse angeordnet sind.
Insbesondere ist vorteilhafter Weise vorgesehen, dass das Gehäuse eine Vorderwand, eine Rückwand und eine Seitenwand aufweist und dass sich zumindest die Zuluftauslässe und der mindestens eine Ablufteinlass an der Seitenwand befinden, bevorzugt liegt der Ablufteinlass zwischen zwei der Zuluftauslässe. Die Seitenwand kann vorzugsweise als umlaufende Seitenwand ausgebildet sein, also ringsherum das Gehäuse begrenzen, wobei es sich dabei bevorzugt um eine Flachseite des Gehäuses handelt, sodass auch das Lüftungsgerät selbst in der Gehäusehöhe sehr kleinbauend und wenig auffallend ausgebildet und installiert werden kann. Bevorzugt liegen alle Lufteinlässe und Luftauslässe im Bereich der Seitenwand.
Nach einer Weiterbildung der Erfindung ist vorgesehen, dass die zonalwirkende Volumenstromstelleinrichtung als zonalwirkende Volumenstromregeleinrichtung ausgebildet ist. Bei der zonalwirkenden Volumenstromstelleinrichtung handelt es sich um eine Steuereinrichtung, d.h., Werte werden eingestellt, jedoch kann es zu einer Abweichung davon kommen. Ist die Ausbildung als zonalwirkende Volumenstromregeleinrichtung vorgesehen, so werden Regelvorgänge durchgeführt, derart, dass die erzielten Istwerte eben so groß sind wie die vorgegebenen Sollwerte. Hierbei handelt es sich um die einzelnen Zonalvolumenströme. Eine Regeleinrichtung, die vorzugsweise auch die Regelung der Zonalvolumenströme umfasst, kann auch die Luftfördermenge des gesamten Volumenstroms/der gesamten Volumenströme mit umfassen.

Nach einer Weiterbildung der Erfindung ist vorgesehen, dass die Volumenstromstelleinrichtung für die Aufteilung des Luftvolumenstroms mindestens ein verstellbares Auslassventil, mindestens ein verstellbares Einlassventil, mindestens ein verstellbares Luftleitelement und/oder mindestens eine verstellbare Luftklappe aufweist. Die erwähnten Ventile, das Luftleitelement und/oder die Luftklappe sind bezüglich der Auslässe und/oder Einlässe des Lüftungsgeräts vorgesehen. Das Luftleitelement unterscheidet sich von der Luftklappe dadurch, dass es vordergründig eine Luftlenkung durchführt, um die Luft des Luftvolumenstroms in mindestens einen bestimmten Bereich zu lenken. Im Hintergrund steht dabei das Öffnen beziehungsweise Verschließen eines entsprechenden Querschnitts des zugehörigen Luftführungswegs. Bei einer Luftklappe ist dies umgekehrt, d.h., vordergründig werden die Zonalvolumenströme querschnittsgesteuert und weniger durch Luftrichtungslenkung.

Eine Weiterbildung der Erfindung sieht einen elektrischen Antrieb, insbesondere elektrischen Regelantrieb, für die Einstellung der Volumenstromstelleinrichtung vor. Eine insbesondere elektronische Steuereinrichtung oder elektrische Regeleinrichtung ist mit dem elektrischen Antrieb, insbesondere elektrischen Regelantrieb, verbunden, der die Einstellung der Volumenstromstelleinrichtung vornimmt, also beispielsweise das Luftleitelement verstellt, um die jeweiligen Zonalvolumenströme zu schaffen.

Es ist vorteilhaft, wenn die Luftfördereinrichtung mindestens zwei Ventilatoren aufweist, von denen einer im ersten Luftweg und der andere im zweiten Luftweg liegt. Der Ventilator im ersten Luftweg saugt Außenluft an und bringt Zuluft ein und der Ventilator im zweiten Luftweg saugt Abluft an und stößt Fortluft aus. Im druckkonstanten beziehungsweise volumenstromkonstanten Betrieb sind diese beiden Luftvolumenströme stets gleich groß. Die Luftfördereinrichtung, also insbesondere die beiden Ventilatoren, werden von der Steuereinrichtung oder der Regeleinrichtung in entsprechender Art und Weise betrieben.

Nach einer Weiterbildung der Erfindung ist vorgesehen, dass das Luftleitelement mindestens eine Leitfläche aufweist, die in einem winkelförmig verlaufenden Bereich des ersten Luftwegs liegt, wobei der winkelförmige Bereich einen ersten, stromaufseitigen Luftwegabschnitt und einen zweiten, stromabseitigen Luftwegabschnitt des ersten Luftwegs bildet, im Bereich der Winkelspitze des winkelförmigen Bereichs ein erster der Zuluftauslässe liegt und im Bereich des stromabseitigen Endes des zweiten Luftwegabschnitts ein zweiter der Zuluftauslässe liegt. Der winkelförmige Bereich weist also zwei winklig zueinander liegende Schenkel auf, der eine Schenkel wird von dem ersten Luftwegabschnitt gebildet und der andere Schenkel von dem zweiten Luftwegabschnitt. Die Worte "stromaufseitig" beziehungsweise "stromabseitig" beziehen sich auf die jeweilige Luftströmung. Der als winkelförmig bezeichnet Bereich kann auch nur annähernd winkelförmig sein oder davon leicht abweichen, beispielsweise T-förmig und so weiter. Von Bedeutung ist, dass sich das Luftleitelement, insbesondere eine Leitfläche von diesem, in diesem winkelförmigen Bereich befindet, um den beiden Zuluftauslässen jeweils ein entsprechend großen Zonalvolumenstrom zuzuführen. Von der Positionierung der Leitfläche ist es abhängig, wie groß der jeweilige Zonalvolumenstrom ist. Vergrößert sich - bei zwei Zuluftauslässen - der eine Zonalvolumenstrom, so nimmt der andere Zonalvolumenstrom in entsprechender Weise ab und umgekehrt. Sind mehr als zwei Zuluftauslässe vorhanden, so gilt das Vorstehende in entsprechender Weise.

Eine Weiterbildung der Erfindung sieht vor, dass das Luftleitelement und dadurch insbesondere die Luftleitfläche des Luftleitelements für das Verstellen schwenkbeweglich gelagert ist, insbesondere in seinem stromabseitigen Bereich schwenkbeweglich gelagert ist. Durch eine Schwenkbewegung des Luftleitelements wird der Luftvolumenstrom demgemäß aufgeteilt und den einzelnen Zuluftauslässen zugeführt.

Bevorzugt ist vorgesehen, dass die Leitfläche in einer ersten Stellung den Luftvolumenstrom im ersten Luftabschnitt etwa hälftig aufteilt und einen ersten der so gebildeten beiden Teilluftströme zu dem ersten Zuluftauslass und den zweiten Teilluftstrom zu dem zweiten Zuluftauslass lenkt. Die erwähnten Teilluftströme entsprechen somit den zuvor erwähnten Zonalvolumenströmen. In der ersten Stellung wird also eine etwa hälftige Luftaufteilung vorgenommen.

Nach einer Weiterbildung der Erfindung ist vorgesehen, dass die Leitfläche in einer zweiten Stellung den Luftvolumenstrom zu dem ersten Zuluftauslass lenkt und den zweiten Luftwegabschnitt absperrt oder im Wesentlichen absperrt. Demzufolge tritt der Luftvolumenstrom ganz oder im Wesentlichen aus dem ersten Zuluftauslass aus und nur ein kleinerer Anteil aus dem zweiten Zuluftauslass.

Ferner ist bevorzugt vorgesehen, dass die Leitfläche in einer dritten Stellung den Volumenstrom zu dem zweiten Zuluftauslass lenkt und den Bereich der Winkelspitze und damit den ersten Zuluftauslass absperrt oder im Wesentlichen absperrt. Dies entspricht demgemäß einer Umkehrung der zuvor erläuterten Verhältnisse. Selbstverständlich sind beliebig viele Zwischenstellungen zwischen den genannten drei Stellungen möglich, sei es nun in diskreter Form oder in kontinuierlicher Form.

Die Zeichnungen veranschaulichen die Erfindung anhand eines Ausführungsbeispiels und zwar zeigt:
- Figur 1: eine perspektivische Ansicht auf ein geöffnetes Lüftungsgerät,
- Figur 2: eine Längsschnittansicht durch das Lüftungsgerät der Figur 1,
- Figur 3: eine Querschnittsansicht in Richtung der Längserstreckung des Lüftungsgeräts der Figur 1,
- Figur 4: eine Rückseitenansicht des Lüftungsgeräts der Figur 1,
- Figur 5: eine der Figur 4 entsprechende Ansicht, jedoch mit geöffneter Rückwand,
- Figur 6: eine zonalwirkende Volumenstromstelleinrichtung des Lüftungsgeräts,
- Figuren 7 bis 9: verschiedene Stellungen einer Luftleitfläche der Volumenstromstelleinrichtung für einen Zonenlüftungsbetrieb des Lüftungsgeräts.

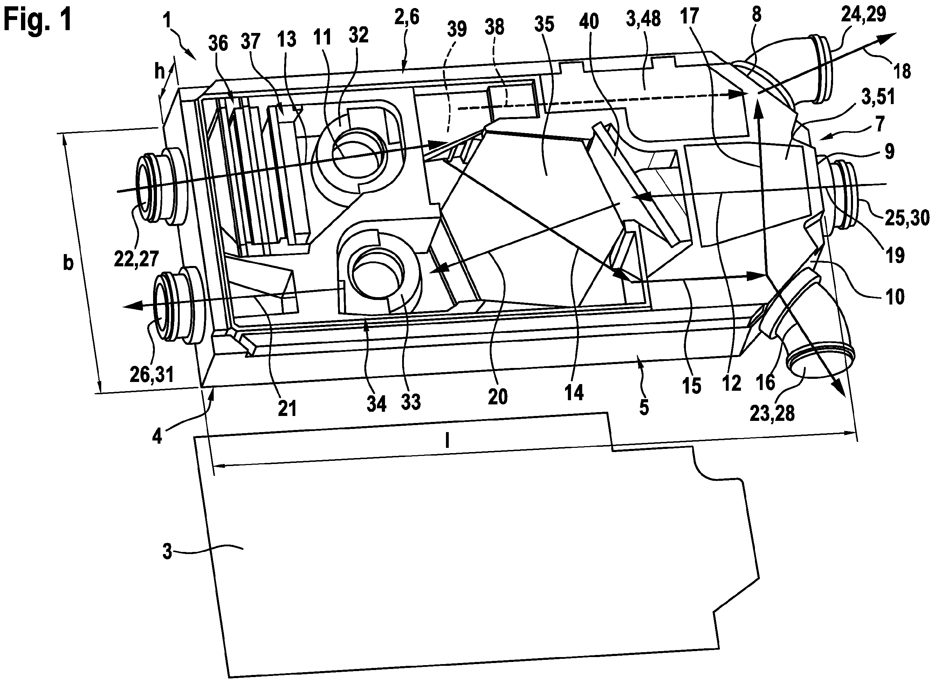

Die Figur 1 zeigt eine perspektivische Ansicht eines Lüftungsgeräts 1. Das Lüftungsgerät 1 dient einer Wohnraumlüftung, insbesondere einer konstanten Wohnraumlüftung, bei der ein druckkonstanter Betrieb erfolgt, sodass die in einer Zeiteinheit zugeführte Luftmenge ebenso groß ist wie die in dieser Zeiteinheit abgeführte Luftmenge. Das Lüftungsgerät 1 ist mit einer Wärmerückgewinnung versehen, die wahlweise in Betrieb genommen werden kann, um beispielsweise Wärmeenergie der Abluft zum Aufwärmen von zugeführter, kalter Außenluft zu verwenden oder zugeführte warme Außenluft mittels abgeführter, kälterer Abluft zu kühlen.

Das Lüftungsgerät 1 weist ein Gehäuse 2 auf, das eine Vorderwand 3 (ein Teil davon ist abgenommen dargestellt), eine in der Figur 1 nicht sichtbare Rückwand 4 sowie eine umlaufende Seitenwand 5 aufweist. Das Gehäuse 2 ist als Flachgehäuse 6 ausgebildet, d.h., die Gehäusehöhe h ist wesentlich kleiner als die Gehäusebreite b ausgebildet, welche wiederum wesentlich kleiner als die Gehäuselänge I ausgebildet ist. Insgesamt liegt eine etwa quaderförmige Gehäuseform des Gehäuses 2 vor. Eine leichte Abweichung ergibt sich von dieser Form dadurch, dass ein Abschnitt 7 der Seitenwand 5 mehrere Seitenwandabschnitte 8, 9 und 10 aufweist, die stumpfwinklig zueinander verlaufen, sodass sich insgesamt ein nach außen etwa konvexer Gehäuseteil ergibt. Im Gehäuse 2 des Lüftungsgeräts 1 sind zwei Luftwege 11 und 12 ausgebildet. Der erste Luftweg 11 wird mittels der Pfeile 13, 14, 15, 16, 17 und 18 angedeutet; der zweite Luftweg 12 wird mittels der Pfeile 19, 20 und 21 angedeutet. Der erste Lüftungsweg 11 weist einen Lufteinlass 22 und Luftauslässe 23 und 24 auf. Der zweite Luftweg 12 weist einen Lufteinlass 25 und einen Luftauslass 26 auf. In den Lufteinlass 22 tritt Außenluft ein, aus den Luftauslässen 23 und 24 tritt Zuluft aus, in den Lufteinlass 25 tritt Abluft ein und aus dem Luftauslass 26 tritt Fortluft aus. Insofern bildet der Lufteinlass 22 einen Außenlufteinlass 27, die Luftauslässe 23 und 24 Zuluftauslässe 28 und 29, der Lufteinlass 25 einen Ablufteinlass 30 und der Luftauslass 26 einen Fortluftauslass 31. Die erwähnten Lufteinlässe beziehungsweise Luftauslässe 27 bis 31 sind als Anschlussstutzen ausgebildet, sodass dort Luftleitungen angeschlossen werden können, die einerseits aus einer Wohnung, einem Einfamilienhaus oder dergleichen herausführen, also mit der Außenatmosphäre kommunizieren und andererseits im Innern der Wohnung, des Einfamilienhauses oder dergleichen liegen, um Zuluft zuzuführen beziehungsweise Abluft abzuführen. Die Luftleitungen und so weiter sind der Einfachheit halber nicht dargestellt.

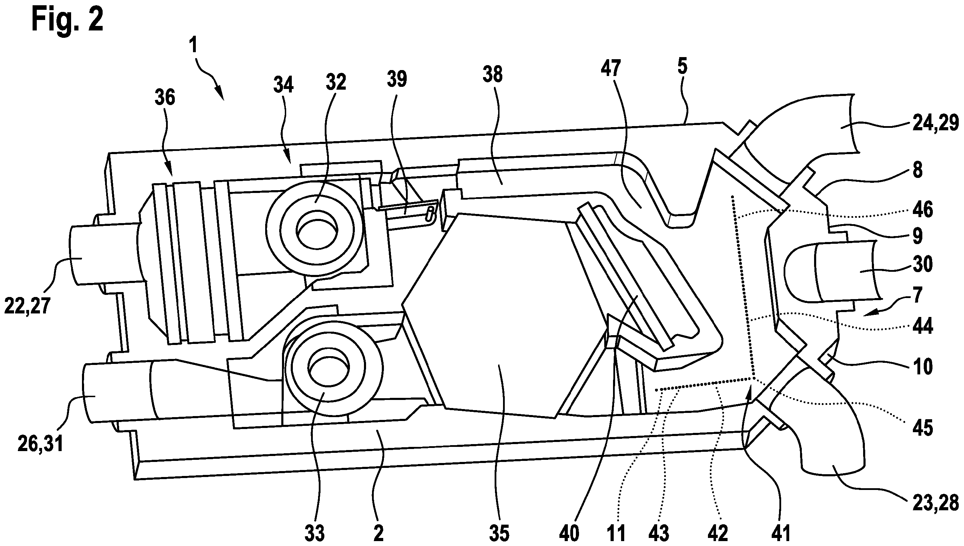

Im ersten Luftweg 11 befindet sich ein erster Ventilator 32 und im zweiten Luftweg 12 ein zweiter Ventilator 33. Die beiden Ventilatoren 32 und 33 bilden eine Luftfördereinrichtung 34, die eine Luftförderung im ersten und zweiten Luftweg 11, 12 bewirkt. Ferner ist im Innern des Gehäuses 2 ein Wärmetauscher 35 angeordnet, der sowohl im ersten Luftweg 11 als auch im zweiten Luftweg 12 liegt und daher einen Wärmetausch zwischen den Luftvolumenströmen im ersten und im zweiten Luftweg 11, 12 vornimmt. Im ersten Luftweg 11 kann sich im Bereich zwischen dem Außenlufteinlass 27 und dem Ventilator 32 eine Luftfilteranordnung 36 und/oder eine Heizung 37, die insbesondere als elektrische Heizung ausgebildet ist, befinden. Zwischen dem Ablufteinlass 30 und dem Wärmetauscher 35 kann sich eine Luftfilteranordnung 40 befinden. Ferner kann ein Bypass 38 vorgesehen sein, der vom Ventilator 32 bis zum Zuluftauslass 28 und/oder 29 führt und insbesondere eingangsseitig eine Bypassklappe 39 aufweist. Mittels der Bypassklappe 39 ist es möglich, den Wärmetauscher 35 zu umgehen, sofern dies für die Betriebsführung gewünscht ist. Die Bypassklappe 39 erlaubt es stellungsabhängig jedoch auch, den Bypass 38 zu verschließen, sodass der erste Luftweg 11 komplett durch den Wärmetauscher 35 führt. Natürlich sind auch Zwischenstellungen der Bypassklappe 39 denkbar, sodass der Bypass 38 nur teilweise in Funktion tritt und auch der Wärmetauscher 35 nur von einem entsprechend großen Luftvolumenteilstrom durchströmt wird. Die Ausbildung des Bypasses 38 und die Lage der Bypassklappe 39 geht besonders deutlich aus der Längsschnittansicht der Figur 2 hervor.

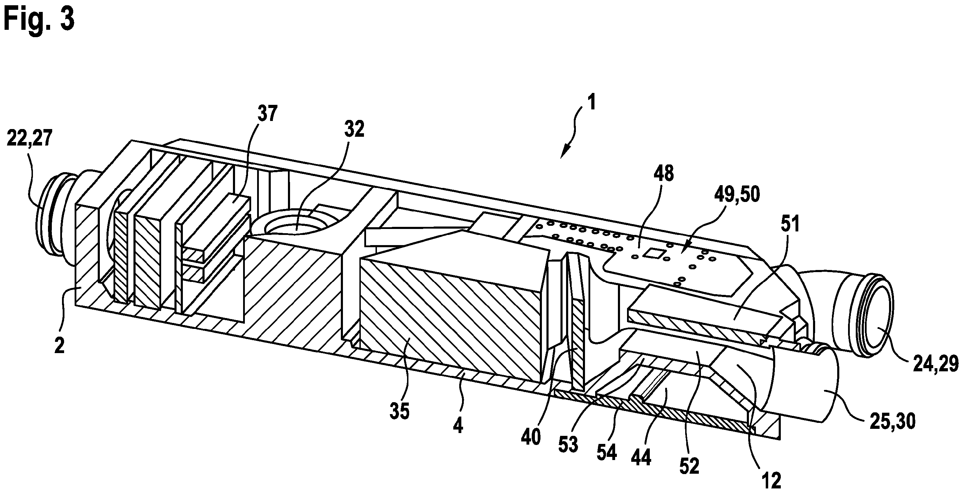

Die Figur 2 zeigt, dass der erste Luftweg 11 im Bereich zwischen dem Wärmetauscher 35 und den Zuluftauslässen 28 und 29 einen winkelförmig verlaufenden Bereich 41 aufweist, der mittels einer punktierten Linie 42 verdeutlicht ist. Der winkelförmige Bereich 41 weist einen ersten, stromaufseitigen Luftwegabschnitt 43 und einen zweiten, stromabseitigen Luftwegabschnitt 44 auf, wobei die beiden Luftwegabschnitte 43 und 44 winklig zueinander stehen. Im Bereich der Winkelspitze 45 des winkelförmigen Bereichs 41 befindet sich der Zuluftauslass 28 und im Bereich des stromabseitigen Endes 46 des zweiten Luftwegabschnitts 44 befindet sich der Zuluftauslass 29. Ferner mündet der Bypass 38 mit seinem stromabseitigen Bereich 47 in den zweiten Luftwegabschnitt 44, etwa in der Mitte von diesem bis etwa im Bereich des Anfangs des stromabseitig liegenden letzten Drittels von diesem. Ein Vergleich der Figur 2 mit der Figur 3 und der Figur 1 zeigt, dass im Gehäuse 2 des Lüftungsgeräts 1 mehrere "Ebenen" für die Luftführung ausgebildet sind. So wird der Bypass 38 mittels einer zur Vorderwand 3 gehörenden Abdeckung 48 abgedeckt. Unterhalb der Abdeckung 48 befindet sich eine Steuer- und/oder Regelelektronik 49 einer Steuer- und/oder Regeleinrichtung 50, ohne dass jedoch der Querschnitt des Bypasses 38 stark eingeengt wird. Eine ebenfalls der Vorderwand 3 angehörende Abdeckung 51 deckt einen Bereich des zweiten Luftweganschnitts 44 ab. Unterhalb der Abdeckung 51 verläuft ein Abschnitt 52 des zweiten Luftwegs 12. Dies ist insbesondere der Figur 3 zu entnehmen. Dieser Abschnitt 52 verbindet den Ablufteinlass 30 mit dem Wärmetauscher 35 gegebenenfalls unter Zwischenschaltung der Luftfilteranordnung 40. Unterhalb des Abschnitts 52 befindet sich der zweite Luftwegabschnitt 44, d.h., er untertunnelt den Abschnitt 52, so wie aus der Figur 3 ersichtlich. Demzufolge befindet sich zwischen dem Abschnitt 52 und dem zweiten Luftwegabschnitt 44 eine Trennwand 53. Der zweite Luftwegabschnitt 44 wird - gemäß Figur 3 - ferner von einer Abdeckung 54 begrenzt, die der Rückwand 4 angehört.

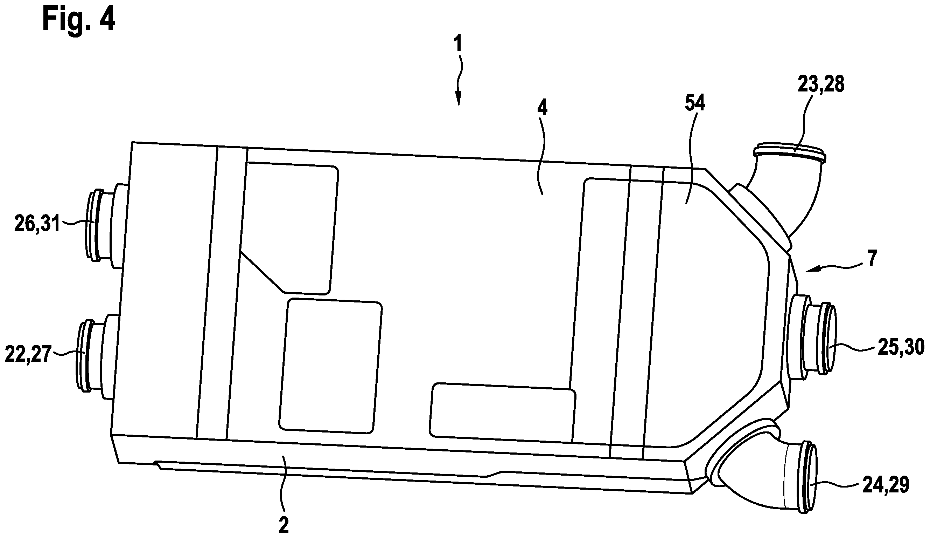

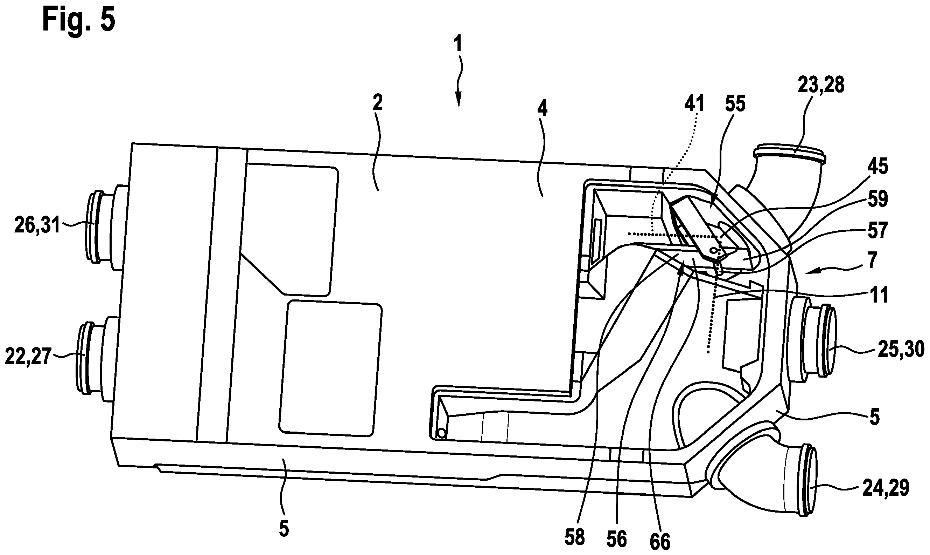

Gemäß der Figuren 4 und 5 lässt sich die Rückwand 4 öffnen, indem die Abdeckung 54 entfernt wird. Die Figur 4 zeigt die Rückwand 4 mit Abdeckung 54 und die Figur 5 bei entfernter Abdeckung 54. Bei entfernter Abdeckung 54 wird - gemäß Figur 5 - ersichtlich, dass sich eine Volumenstromstelleinrichtung 55 im ersten Luftweg 11, insbesondere im winkelförmigen Bereich 41 des ersten Luftwegs 11 befindet. Die Volumenstromstelleinrichtung 55 weist ein Luftleitelement 56 auf, das um eine Achse 57 schwenkbeweglich angeordnet ist. Die Achse 57 liegt etwa im Bereich der Winkelspitze 45 des winkelförmigen Bereichs 41. Das Luftleitelement 56 erstreckt sich beidseitig der Achse 57, und zwar stromaufseitig mit einem größeren Bereich 58 und stromabseitig mit einem kleineren Bereich 59. Der größere Bereich 58 des Luftleitelements 56 befindet sich in dem ersten Luftwegabschnitt 43 des winkelförmigen Bereichs 41. Der kleinere Bereich 59 des Luftleitelements 56 ragt bis in die Nähe des Abschnitts 7 der Seitenwand 5.

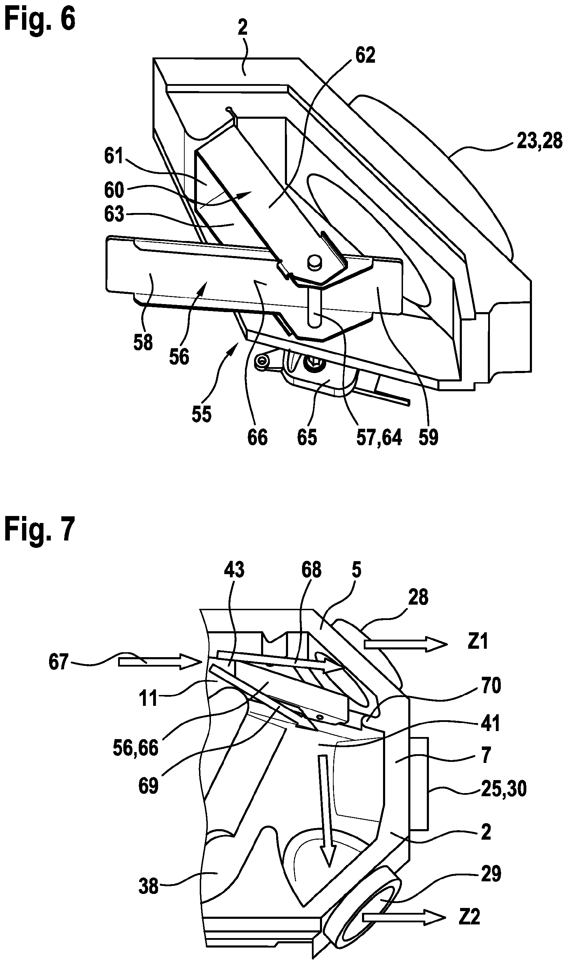

Die Figur 6 zeigt den Aufbau der Volumenstromstelleinrichtung 55. Diese weist ein U-förmiges Halteelement 60 auf, das mit seinem Steg 61 am Gehäuse 2 befestigt ist. Zwischen zwei Schenkeln 62 und 63 des Halteelements 60 verläuft eine die Achse 57 bildende Welle 64, die drehfest mit einem elektrischen Antrieb 65 und drehfest mit dem Luftleitelement 56 verbunden ist, das sich bereichsweise ebenfalls zwischen den beiden Schenkeln 62 und 63 erstreckt. Der elektrische Antrieb 65 kann als elektrischer Regelantrieb und/oder elektrischer Steuerantrieb ausgebildet sein und wirkt mit der Steuer- und/oder Regeleinrichtung 50 zusammen. In Abhängigkeit von dem Ergebnis einer Steuerung und/oder Regelung wird der Antrieb 65 angesteuert und führt zu einer entsprechenden Schwenkstellung des Luftleitelements 56, wobei verschiedene Schwenkstellungen in den Figuren 7 bis 9 dargestellt sind.

Die Figur 7 zeigt, dass eine Leitfläche 66 des Luftleitelements 56 eine erste Stellung einnimmt. Die Leitfläche 66 wird von dem großen Bereich 58 und dem kleinen Bereich 59 gebildet. Durch die erste Stellung der Leitfläche 66 wird der Luftvolumenstrom 67 im ersten Luftwegabschnitt 43 etwa hälftig aufgeteilt, wodurch ein erster Teilluftstrom 68 und ein zweiter Teilluftstrom 69 ausgebildet wird. Die Leitfläche 66 verläuft etwa in Richtung des ankommenden Luftvolumenstroms 67, sodass sich auf der einen Seite der Leitfläche 66 der erste Teilluftstrom 68 und auf der anderen Seite der Leitfläche 66 der zweite Teilluftstrom 69 bildet. Durch die erste Stellung der Leitfläche 66 wird der erste Teilluftstrom 68 zum Zuluftlauslass 28 geleitet und der zweite Teilluftstrom 69 zu dem Zuluftauslass 29. An dem Abschnitt 7 der Seitenwand 5 kann sich innenseitig eine Gehäusezunge 70 des Gehäuses 2 befinden, die in der ersten Stellung mit der Leitfläche 66 etwa fluchtet, so wie dies aus der Figur 7 hervorgeht, wodurch eine bessere Separierung der beiden Teilluftströme 68 und 69 erfolgt. Weist der Wohnraum der Wohnung, des Einfamilienhauses oder dergleichen eine erste Zone Z1 und eine zweite Zone Z2 auf, so wird - gemäß Figur 7 - der erste Teilluftstrom 68 der Zone Z1 und der zweite Teilluftstrom 69 der Zone Z2 zugeleitet, also beide Zonen Z1 und Z2 etwa gleich beströmt.

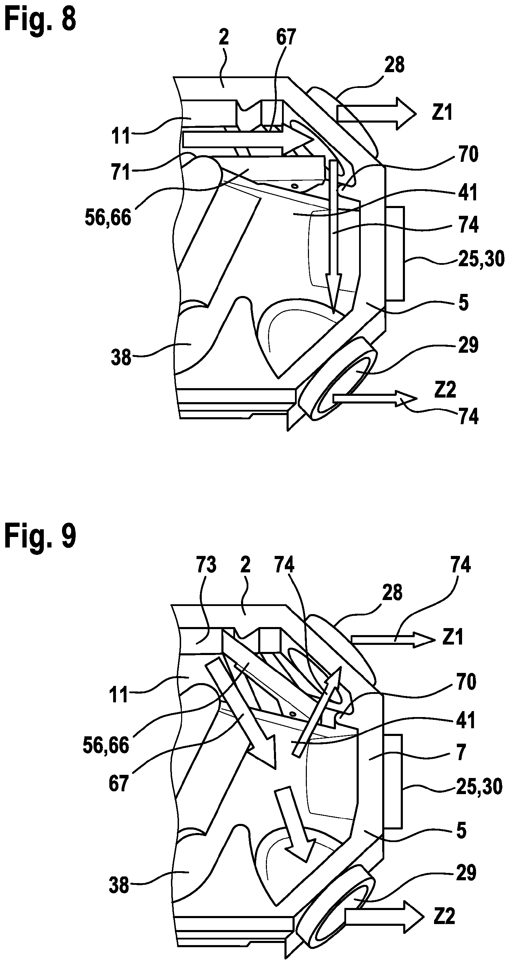

Wird die Volumenstromstelleinrichtung 55 gemäß Figur 8 eingestellt, so weist die Leitfläche 66 des Luftleitelements 56 eine zweite Stellung auf. Gegenüber der ersten Stellung der Figur 7 ist das Luftleitelement 56 im Gegenuhrzeigersinn um die Achse 57 verschwenkt worden, vorzugsweise mittels des Antriebs 65 verschwenkt worden. Das stromaufseitige Ende des größeren Bereichs 58 liegt an der inneren Seitenwand 71 des ersten Luftwegs 11 an, wodurch der Luftvolumenstrom 67 im Wesentlichen zum Zuluftauslass 28 gelenkt wird und nur ein geringer Anteil 74 des Luftvolumenstroms 67 zum Zuluftauslass 29 gelangt. Dieser geringe Anteil 74 passiert eine Engstelle zwischen dem stromabseitigen Ende des Luftleitelements 56 und der Innenseite der Seitenwand 5, insbesondere der Gehäusezunge 70. In der zweiten Stellung wird der Luftvolumenstrom 67 somit im Wesentlichen der Zone Z1 zugeleitet und nur in geringfügigem Umfang der Zone Z2.

Die Figur 9 verdeutlicht eine dritte Stellung der Luftleitfläche 66 des Luftleitelements 56. Das Luftleitelement 56 wurde zur Einnahme der dritten Stellung gegenüber der Stellung in der Figur 7 im Uhrzeigersinn um die Achse 57 geschwenkt, derart, dass des stromaufseitige Ende des großen Bereichs 58 des Luftleitelements 56 nunmehr gegen die außenliegende Seitenwand 73 des ersten Luftwegs 11 tritt. Durch die dritte Stellung wird der Luftvolumenstrom 67 im Wesentlichen zum Zuluftauslass 29 geleitet, sodass die Zone Z2 den wesentlichen Anteil erhält. Die Luftleitfläche 66 sperrt in der dritten Stellung im Wesentlichen den Zugang zu dem Zuluftauslass 28 ab, sodass nur ein geringfügiger Anteil 74 des Luftvolumenstroms 67 zum Zuluftauslass 28 gelangt, nämlich durch eine Engstelle zwischen der Leitfläche 66 und dem Abschnitt 7 des Gehäuses 2, insbesondere der Gehäusezunge 70.

Aus den vorstehenden Erläuterungen zu den drei verschiedenen Stellungen des Luftleitelements 56, insbesondere dessen Luftleitfläche 66, wird deutlich, dass eine Aufteilung des Luftvolumenstroms 67 im ersten Luftweg 11 ermöglicht ist, wobei natürlich auch Zwischenstellungen denkbar sind, d.h., das Luftleitelement 56 lässt sich beispielsweise kontinuierlich oder in diskreten Schritten derart mittels der Steuer- und/oder Regeleinrichtung 50 einstellen, so wie dies für die verschiedenen Zonen, insbesondere Z1 und Z2, des zu belüftenden und/oder zu klimatisierenden Bereichs der Wohnung, des Einfamilienhauses oder dergleichen gewünscht ist.

Zur Veranschaulichung des Betriebs soll nachstehend auf die Gesamtfunktion des Lüftungsgeräts 1 eingegangen werden. Es wird davon ausgegangen, dass - gesteuert und/oder geregelt von der Steuer- und/oder Regeleinrichtung 50 - die beiden Ventilatoren 32 und 33 eine konstante Wohnraumlüftung durchführen, d.h., der geförderte Luftvolumenstrom im ersten Luftweg 11 ist ebenso groß wie der geförderte Luftvolumenstrom im zweiten Luftweg 12. Hierdurch wird Außenluft über den Außenlufteinlass 27 angesaugt, die vorzugsweise die Luftfilteranordnung 36 und die Heizung 37 durchsetzt, wobei die Heizung 37 nur dann in Betrieb genommen wird, wenn dies aufgrund niedriger Außenlufttemperaturen erforderlich ist. Die Außenluft strömt durch den Wärmetauscher 35 und gelangt dann in den winkelförmig verlaufenden Bereich 41 des ersten Luftwegs 11, wobei - in Abhängigkeit der Einstellung der Volumenstromstelleinrichtung 55 - entsprechende Anteile des Luftvolumenstroms 67 auf die beiden Zuluftauslässe 28 und 29 aufgeteilt werden. Mittels des Ventilators 33 wird aus der Wohnung, dem Einfamilienhaus oder dergleichen Abluft angesaugt, die in den Ablufteinlass 30 eintritt, vorzugsweise die Luftfilteranordnung 40 durchsetzt und dann durch den Wärmetauscher 35 strömt und über den Ventilator 33 dem Zuluftauslass 26 zugeführt wird und von dort als Fortluft an die Außenatmosphäre abgegeben wird. Durch den Wärmetausch im Wärmetauscher 35 kann die Temperatur der Zuluft gegenüber der Temperatur der Abluft verändert werden. Beispielsweise wird kalte Außenluft durch wärmere Abluft aufgeheizt oder warme Zuluft durch kühlere Abluft gekühlt. Soll der Wärmetausch des Wärmetauschers 35 ganz oder teilweise ausgeschaltet werden, so tritt die Bypassklappe 39 in Funktion, die den Luftvolumenstrom 67 im ersten Luftweg 11 stromabwärts des Ventilators 32 derart umlenkt, dass er zumindest teilweise den Bypass 38 passiert, den Wärmetauscher 35 entsprechend umgeht und auf diese Art und Weise den beiden Zuluftauslässen 28 und 29 zugeleitet wird. Insbesondere ist bei eingeschaltetem Bypass 38 vorgesehen, dass das Luftleitelement 56 die erste Stellung automatisch einnimmt.

## Patentansprüche

1. Lüftungsgerät mit Wärmerückgewinnung für eine Wohnraumlüftung, mit einem ersten Luftweg für den Eintritt von Außenluft und den Austritt von Zuluft und einem zweiten Luftweg für den Eintritt von Abluft und den Austritt von Fortluft, sowie mit einem Wärmetauscher für einen Wärmetausch zwischen dem ersten und dem zweiten Luftweg, und mit einer Luftfördereinrichtung für eine Luftförderung im ersten und/oder im zweiten Luftweg, wobei der erste Luftweg mehrere Zuluftauslässe für die Zuluft und eine zonal wirkende Volumenstromstelleinrichtung aufweist, mit der für eine Zonenlüftung der Luftvolumenstrom im ersten Luftweg auf die einzelnen Zuluftauslässe einstellbar aufgeteilt wird, **dadurch gekennzeichnet, dass** zwischen zwei Zuluftauslässen (28,29) mindestens ein Ablufteinlass (30) für die Abluft liegt.

2. Lüftungsgerät nach Anspruch 1, **gekennzeichnet durch** ein Gehäuse (2), in dem sich der erste Luftweg (11), der zweite Luftweg (12), der Wärmetauscher (35), die Luftfördereinrichtung (34) und die Volumenstromstelleinrichtung (55) befinden.

3. Lüftungsgerät nach Anspruch 2, **dadurch gekennzeichnet, dass** mindestens ein Außenlufteinlass (27) für die Außenluft, die mehreren Zuluftauslässe (28,29), der mindestens eine Ablufteinlass (30) und mindestens ein Fortluftauslass (31) für die Fortluft am Gehäuse (2) angeordnet sind.

4. Lüftungsgerät nach einem der vorhergehenden Ansprüche 2 oder 3, **dadurch gekennzeichnet, dass** das Gehäuse (2) eine Vorderwand (3), eine Rückwand (4) und eine Seitenwand (5) aufweist und dass sich zumindest die Zuluftauslässe (28,29) und der mindestens eine Ablufteinlass (30) an der Seitenwand (5) befinden.

5. Lüftungsgerät nach Anspruch 4, **dadurch gekennzeichnet, dass** die Seitenwand (5) eine umlaufende Seitenwand (5), insbesondere eine Flachseite des Gehäuses (2), ist.

6. Lüftungsgerät nach einem der vorhergehenden Ansprüche, **dadurch gekennzeichnet, dass** die zonal wirkende Volumenstromstelleinrichtung (55) als zonal wirkende Volumenstromregeleinrichtung (55) ausgebildet ist.

7. Lüftungsgerät nach einem der vorhergehenden Ansprüche, **dadurch gekennzeichnet, dass** die Volumenstromstelleinrichtung (55) für die Aufteilung des Luftvolumenstroms (67) mindestens ein verstellbares Auslassventil, und/oder mindestens ein verstellbares Einlassventil, und/oder mindestens ein verstellbares Luftleitelement (56) und/oder mindestens eine verstellbare Luftklappe aufweist.

8. Lüftungsgerät nach einem der vorhergehenden Ansprüche, **gekennzeichnet durch** einen elektrischen Antrieb (65), insbesondere elektrischen Regelantrieb, für die Einstellung der Volumenstromstelleinrichtung (55).

9. Lüftungsgerät nach einem der vorhergehenden Ansprüche, **dadurch gekennzeichnet, dass** die Luftfördereinrichtung (34) mindestens zwei Ventilatoren (32,33) aufweist, von denen einer im ersten Luftweg (11) und der andere im zweiten Luftweg (12) liegt.

10. Lüftungsgerät nach einem der vorhergehenden Ansprüche 7 bis 9, **dadurch gekennzeichnet, dass** das Luftleitelement (56) mindestens eine Leitfläche (66) aufweist, die in einem winkelförmig verlaufenden Bereich (41) des ersten Luftwegs (11) liegt, wobei der winkelförmige Bereich (41) einen ersten, stromaufseitigen Luftwegabschnitt (43) und einen zweiten, stromabseitigen Luftwegabschnitt (44) des ersten Luftwegs (11) bildet, im Bereich der Winkelspitze (45) des winkelförmigen Bereichs (41) ein erster der Zuluftauslässe (28) liegt und im Bereich des stromabseitigen Endes des zweiten Luftwegabschnitts (44) ein zweiter der Zuluftauslässe (29) liegt.

11. Lüftungsgerät nach Anspruch 10, **dadurch gekennzeichnet, dass** das Luftleitelement (56) und dadurch insbesondere die Leitfläche (66) des Luftleitelements (56) für das Verstellen schwenkbeweglich gelagert ist, insbesondere in seinem stromabseitigen Bereich schwenkbeweglich gelagert ist.

12. Lüftungsgerät nach einem der vorhergehenden Ansprüche 10 oder 11, **dadurch gekennzeichnet, dass** die Leitfläche (66) in einer ersten Stellung den Luftvolumenstrom (67) im ersten Luftwegabschnitt (43) etwa hälftig aufteilt und einen ersten (68) der so gebildeten beiden Teilluftströme (68,69) zu dem ersten Zuluftauslass (28) und den zweiten Teilluftstrom (69) zu dem zweiten Zuluftauslass (29) lenkt.

13. Lüftungsgerät nach einem der vorhergehenden Ansprüche 10 bis 12, **dadurch gekennzeichnet, dass** die Leitfläche (66) in einer zweiten Stellung den Luftvolumenstrom (67) zu dem ersten Zuluftauslass (28) lenkt und den zweiten Luftwegabschnitt (44) absperrt oder im Wesentlichen absperrt.

14. Lüftungsgerät nach einem der vorhergehenden Ansprüche 10 bis 13, **dadurch gekennzeichnet, dass** die Leitfläche (66) in einer dritten Stellung den Luftvolumenstrom (67) zu dem zweiten Zuluftauslass (29) lenkt und den Bereich der Winkelspitze (45) und damit den ersten Zuluftauslass (28) absperrt oder im Wesentlichen absperrt.

## Claims

1. Ventilation device with heat recovery for a living space ventilation system, comprising a first air path for the entry of outdoor air and the escape of supply air and a second air path for the entry of extract air and the escape of exhaust air, and comprising a heat exchanger for heat exchange between the first and the second air path, and comprising an air-conveying installation for conveying air in the first and/or in the second air path, the first air path having a plurality of supply air outlets for the supply air and a zonally acting flow rate adjustment installation, by means of which the air flow rate in the first air path is adjustably distributed to the individual supply air outlets for zonal ventilation, **characterised in that** at least one extract air inlet (30) for the extract air is positioned between two supply air outlets (28, 29).

2. Ventilation device according to claim 1, **characterised by** a housing (2) in which the first air path (11), the second air path (12), the heat exchanger (35), the air-conveying installation (34) and the flow rate adjustment installation (55) are located.

3. Ventilation device according to claim 2, **characterised in that** at least one outdoor air inlet (27) for the outdoor air, the plurality of supply air outlets (28, 29), the at least one extract air inlet (30) and at least one exhaust air outlet (31) for the exhaust air are arranged on the housing (2).

4. Ventilation device according to any of the preceding claims 2 and 3, **characterised in that** the housing (2) has a front wall (3), a rear wall (4) and a side wall (5), and **in that** at least the supply air outlets (28, 29) and the at least one extract air inlet (30) are located on the side wall (5).

5. Ventilation device according to claim 4, **characterised in that** the side wall (5) is a circumferential side wall (5), in particular a planar face of the housing (2).

6. Ventilation device according to any of the preceding claims, **characterised in that** the zonally acting flow rate adjustment installation (55) is formed as a zonally acting flow rate regulation installation (55).

7. Ventilation device according to any of the preceding claims, **characterised in that** for distributing the air flow rate (67) the flow rate adjustment installation (55) has at least one adjustable outlet valve and/or at least one adjustable inlet valve and/or at least one adjustable air guide element (56) and/or at least one adjustable air shutter.

8. Ventilation device according to any of the preceding claims, **characterised by** an electrical drive (65), in particular an electrical regulating drive, for adjusting the flow rate adjustment installation (55).

9. Ventilation device according to any of the preceding claims, **characterised in that** the air-conveying installation (34) has at least two ventilators (32, 33), of which one is positioned in the first air path (11) and the other in the second air path (12).

10. Ventilation device according to any of preceding claims 7 to 9, **characterised in that** the air guide element (56) has at least one guide face (66), which is positioned in an angularly extending region (41) of the first air path (11), the angular region (41) forming a first, upstream air path portion (43) and a second, downstream air path portion (44) of the first air path (11), a first of the air outlets (28) being positioned in the region of the angle tip (45) of the angular region (41) and a second of the air outlets (29) being positioned in the region of the downstream end of the second air path portion (44).

11. Ventilation device according to claim 10, **characterised in that** the air guide element (56) and thus in particular the guide face (66) of the air guide element (56) is mounted pivotably for adjustment, in particular mounted pivotably in the downstream region thereof.

12. Ventilation device according to any of the preceding claims 10 and 11, **characterised in that** in a first position the guide face (66) divides the air flow rate (67) in the first air path portion (43) approximately into equal halves and deflects a first (68) of the two air sub-flows (68, 69) thus formed to the first supply air outlet (28) and the second air sub-flow (69) to the second supply outlet (29).

13. Ventilation device according to any of preceding claims 10 to 12, **characterised in that** in a second position the guide face (66) deflects the air flow rate (67) to the first supply air outlet (28) and blocks off or substantially blocks off the second air path portion (44).

14. Ventilation device according to any of preceding claims 10 to 13, **characterised in that** in a third position the guide face (66) deflects the air volume flow (67) to the second supply air outlet (29) and blocks off or substantially blocks off the region of the angle tip (45) and thus the first supply air outlet (28).

## Revendications

1. Appareil de ventilation avec récupération de chaleur pour une ventilation d'habitation, comprenant une première voie d'air pour l'entrée d'air extérieur et la sortie d'air pulsé et une seconde voie d'air pour l'entrée d'air extrait et la sortie d'air rejeté, ainsi qu'un échangeur de chaleur pour un échange de chaleur entre la première et la seconde voie d'air, et comprenant un moyen de transport d'air pour un transport de l'air dans la première et/ou dans la seconde voie d'air, la première voie d'air comportant plusieurs sorties d'air pulsé pour l'air pulsé et un moyen de commande du débit volumétrique agissant de manière zonale, au moyen duquel, pour une ventilation par zones, le débit volumétrique d'air dans la première voie d'air est réparti de manière réglable entre les différentes sorties d'air pulsé, **caractérisé en ce qu'**au moins une entrée d'air extrait (30) pour l'air extrait se trouve entre deux sorties d'air pulsé (28, 29).

2. Appareil de ventilation selon la revendication 1, **caractérisé par** un boîtier (2), dans lequel la première voie d'air (11), la seconde voie d'air (12), l'échangeur de chaleur (35), le moyen de transport d'air (34) et le moyen de commande de débit volumétrique (55) se trouvent.

3. Appareil de ventilation selon la revendication 2, **caractérisé en ce qu'**au moins une entrée d'air extérieur (27) pour l'air extérieur, les plusieurs sorties d'air pulsé (28, 29), l'au moins une entrée d'air extrait (30) et au moins une sortie d'air rejeté (31) pour l'air rejeté sont disposées sur le boîtier (2).

4. Appareil de ventilation selon l'une des revendications précédentes 2 ou 3, **caractérisé en ce que** le boîtier (2) comporte une paroi avant (3), une paroi arrière (4) et une paroi latérale (5) et **en ce qu'**au moins les sorties d'air pulsé (28, 29) et l'au moins une entrée d'air extrait (30) se trouvent sur la paroi latérale (5).

5. Appareil de ventilation selon la revendication 4, **caractérisé en ce que** la paroi latérale (5) est une paroi latérale (5) périphérique, en particulier un côté plat du boîtier (2).

6. Appareil de ventilation selon l'une des revendications précédentes, **caractérisé en ce que** le moyen de commande de débit volumétrique (55) agissant de manière zonale est réalisé sous la forme d'un moyen de régulation de débit volumétrique (55) agissant de manière zonale.

7. Appareil de ventilation selon l'une des revendications précédentes, **caractérisé en ce que** le moyen de commande de débit volumétrique (55) comporte, pour la répartition du débit volumétrique d'air (67), au moins une soupape de sortie réglable, et/ou au moins une soupape d'entrée réglable, et/ou au moins un élément de guidage d'air (56) réglable et/ou au moins un volet d'aération réglable.

8. Appareil de ventilation selon l'une des revendications précédentes, **caractérisé par** un entraînement électrique (65) en particulier un variateur de vitesse électrique, pour le réglage du moyen de commande de débit volumétrique (55).

9. Appareil de ventilation selon l'une des revendications précédentes, **caractérisé en ce que** le moyen de transport d'air (34) comporte au moins deux ventilateurs (32, 33), dont un se trouve dans la première voie d'air (11) et l'autre dans la seconde voie d'air (12).

10. Appareil de ventilation selon l'une des revendications précédentes 7 à 9, **caractérisé en ce que** l'élément de guidage d'air (56) comporte au moins une surface de guidage (66), qui se trouve dans une zone s'étendant de manière angulaire (41) de la première voie d'air (11), la zone angulaire (41) formant une première partie amont de voie d'air (43) et une seconde partie aval de voie d'air (44) de la première voie d'air (11), une première des sorties d'air pulsé (28) se trouvant dans la zone du sommet de l'angle (45) de la zone angulaire (41) et une seconde des sorties d'air pulsé (29) se trouvant dans la zone de l'extrémité aval de la seconde partie de voie d'air (44).

11. Appareil de ventilation selon la revendication 10, **caractérisé en ce que** l'élément de guidage d'air (56) et ainsi en particulier la surface de guidage (66) de l'élément de guidage d'air (56) est monté mobile de manière pivotante pour le réglage, en particulier monté mobile de manière pivotante dans sa zone aval.

12. Appareil de ventilation selon l'une des revendications précédentes 10 ou 11, **caractérisé en ce que**, dans une première position, la surface de guidage (66) divise le débit volumétrique d'air (67) dans la première partie de voie d'air (43) approximativement en deux parties égales et dirige un premier (68) des deux flux d'air partiels (68, 69) ainsi formés vers la première sortie d'air pulsé (28) et le second flux d'air partiel (69) vers la seconde sortie d'air pulsé (29).

13. Appareil de ventilation selon l'une des revendications précédentes 10 à 12, **caractérisé en ce que**, dans une deuxième position, la surface de guidage (66) dirige le débit volumétrique d'air (67) vers la première sortie d'air pulsé (28) et bloque ou bloque essentiellement la seconde partie de voie d'air (44).

14. Appareil de ventilation selon l'une des revendications précédentes 10 à 13, **caractérisé en ce que**, dans une troisième position, la surface de guidage (66) dirige le débit volumétrique d'air (67) vers la seconde sortie d'air pulsé (29) et bloque ou bloque essentiellement la zone du sommet de l'angle (45) et ainsi la première sortie d'air pulsé (28).
